(19) Europäisches Patentamt
European Patent Office
Office européen des brevets

(11) Publication number: 0 634 460 A2

# (12) EUROPEAN PATENT APPLICATION

(21) Application number: 94110793.0

(51) Int. Cl.[6]: C09D 5/08

(22) Date of filing: 12.07.94

(30) Priority: 13.07.93 GB 9314407
24.12.93 GB 9326441

(43) Date of publication of application:
18.01.95 Bulletin 95/03

(84) Designated Contracting States:
AT BE CH DE DK ES FR GB GR IE IT LI LU MC NL PT SE

(71) Applicant: ALBRIGHT & WILSON LIMITED
P.O. Box 3,
210-222 Hagley Road West
Oldbury,
Warley,
West Midlands B68 0NN (GB)

(72) Inventor: Bamber, Michael
4 Park Grove
Water Orton,
Warwickshire B46 1PN (GB)
Inventor: Collier, John Richard
69 Stagborough Way,
Chase Heights,
Hednesford
Cannock,
Staffordshire WS12 5UD (GB)
Inventor: Connarty, Bernhard Paul
36 North End,
Wirksworth
Derbyshire,
DE4 4FG (GB)
Inventor: Henderson, William Dr.
R D 1,
Horsham Downs,
Hamilton (NZ)
Inventor: Holker, Kenneth Urmston
13 Highgate Close
Kidderminster,
Worcestershire DY11 6JL (GB)
Inventor: Laffey, Thomas Gerard
9 Ouail Park Drive
Kidderminster,
Worcestershire DY10 4HF (GB)
Inventor: Newton, Robert John
27 Silverdale Gardens,
Wordsley
Near Stourbridge,
West Midlands DY8 5NU (GB)

(74) Representative: Savidge, Roger Gordon Madgwick et al
Albright & Wilson Limited,
Patents Department,
P.O. Box 3,
210-222 Hagley Road West,
Oldbury
Warley,
West Midlands B68 0NN (GB)

## (54) Anticorrosive pigments.

(57) Anticorrosive pigments derived from metal salts of phosphoric or phosphonic acids. Metals are those forming water-insoluble salts of the acids, e.g. Mg,Ca,Sr,Ba,Al,Sn,Ti,Zr,V,Mn,Cr,Mo,W,Fe,Co and Zn. Paint compositions containing the pigments are also described.

EP 0 634 460 A2

This invention relates to anticorrosive pigments and to paint compositions, adhesive compositions and other protective coatings and pretreatment compositions including said pigments.

Many of the currently-used anticorrosive pigments have deep colours and this necessitates an increase in the thickness and number of finishing coats which have to be applied to the surface to be protected. Moreover, some of the known anticorrosive pigments, especially those derived from lead and chromium, are inherently toxic and hence environmentally unacceptable.

Several types of light-coloured, non-toxic pigments have been proposed, including zinc phosphate, zinc molybdate and barium metaborate, but these have been found to have shortcomings when compared with pigments derived from lead and chromium.

Protective coatings containing anticorrosive pigments are used to inhibit the formation of rust, to inhibit loss of metal by corrosion and to inhibit the formation of corrosion products on the surface to be protected and consequently to improve paint adhesion and to improve the adhesion of the pretreatment composition to the surface to be protected.

We have now found that pigments derived from certain organic phosphoric acids and organic phosphonic acids, give improved corrosion inhibition when used in paint compositions and adhesive compositions.

In particular we have found that substantially water insoluble polyvalent metal salts of phosphono carboxylic acids are especially useful as corrosion resistant pigments.

Water soluble salts of phosphonocarboxylic acids are known to be particularly useful for the preparation of water treatment agents that inhibit scale formation and/or corrosion of metal e.g. iron, surfaces by aqueous systems, such as boiler water, and are effective when present in very low concentrations e.g. 0.1 to 100 ppm.

Such agents, on account of the minimum concentrations required for effective action, are known as threshold agents. The threshold levels are typically very much lower than would be required to achieve useful protection by a stoichiometric reagent such as a classical chelating agent.

One group of compounds, which has been reported to show scale and corrosion inhibiting properties, are the water soluble salts of phosphonosuccinic acid. These are not, however, sufficiently effective to have enjoyed significant commercial success.

A particularly successful threshold scale inhibitor is the sodium salt of 2-phosphono-1,2,4 - tricarboxybutane which will be referred to herein as "PTCB". This is effective in particularly low concentration and is said to be useful in the treatment of certain problem water systems, which cannot be effectively treated by other scale inhibitors. PTCB is not, however, normally used commercially as a corrosion inhibitor.

A threshold corrosion inhibitor in current use is the sodium salt of 2-hydroxy-2-phosphonoacetic acid, $(HO)_2$ PO CHOH.COOH, hereinafter referred to as HPP. HPP has some major drawbacks as a threshold corrosion inhibitor, in that it is relatively ineffective in the presence of zinc, which is widely used in water treatment, and in chlorinated water systems.

EP-A-2252322 describes phosphonocarboxylic acids and mixtures, which are useful as threshold scale inhibitors and/or corrosion inhibitors in water treatment.

It has been proposed in GB 2121419 to use calcium or zinc salts of certain polyphosphonic acids, of which the only one practically exemplified is etidronic acid, also known as acetodiphosphonic acid (ADPA), as pigments. However in general, because of the very different environments in which they operate, water treatment agents and anticorrosive pigments have hitherto been regarded as separate arts with little or no overlap. The calcium and zinc salts of ADPA referred above are in this respect unusual, but have not given adequate performance to justify commercial exploitation. They thus tend to confirm rather than contradict the generality of the foregoing statement.

According to one embodiment the present invention provides an anticorrosive pigment comprising a polyvalent metal salt of an organo-substituted phosphoric acid or of an organo-substituted, phosphonic acid, said phosphonic acid containing only one phosphonic acid entity, or of a phosphono carboxylic acid.

According to a second embodiment the invention provides the use of a polyvalent metal salt of a phosphonocarboxylic acid as a corrosion inhibiting pigment.

According to a further embodiment the invention provides a pigment comprising a calcium, zinc, barium, strontium or magnesium salt of a phosphonocarboxylic acid.

According to a further embodiment our invention provides a coating composition comprising: (i) a liquid vehicle consisting of a drying oil, a volatile organic solvent and/or water; (ii) a binder consisting of said drying oil and/or a curable resin or film forming polymer dispersed or dissolved in said liquid vehicle;and (iii) a pigment dispersed or dispersible in said liquid vehicle and comprising a pigment of the invention, and especially a substantially water insoluble salt of an organic phosphonocarboxylic acid.

According to a further embodiment the invention provides a method of making corrosion inhibiting pigment which comprises heating an aqueous solution containing from 5% to saturation of a phosphonocarboxylic acid or a water soluble salt thereof with a calcium and/or zinc salt of a strong inorganic acid, and separating a solid calcium and/or zinc salt of phosphonocarboxylic acid from the reaction mixture.

According to a further embodiment, our invention provides a process of preparing a surface for the subsequent application of an organic finishing coating by applying an aqueous solution comprising an organo substituted phosphoric acid or an organo substituted phosphonic acid, or dispersion comprising an organo substituted phosphoric acid or an organo substituted phosphonic acid with colloidal silica to said surface and the coated surface is dried, whereby a priming coat of an anti corrosion or adhesion-promoting material is deposited thereon.

In the aforesaid process of preparing a surface for the subsequent application of an organic finishing coating, the solution or dispersion referred to is dried, suitably at 20 to 300°C. The surface is preferably metallic, the metal being iron, aluminium, tin or zinc or an alloy comprising one or more of these. After the drying of the solution or dispersion from the surface, the surface may additionally be coated with an organic material. The material may comprise a heat-curable organic resin which is then cured.

Preferably, the pigment is a salt of a metal which forms a substantially water-insoluble salt with said phosphoric or phosphonic acid. By "substantially water-insoluble" is meant a solubility in water of, for example, 2g/l or lower at 20°C.

The salt may be a salt of one or more metals, for example one or more metals selected from magnesium, calcium, strontium, barium, aluminium, tin, lead, titanium, zirconium, vanadium, chromium, molybdenum, tungsten, manganese, iron, cobalt and zinc.

According to one aspect of the present invention, the phosphoric or phosphonic acid can be substituted by one or more groups selected from alkyl, alkenyl, cycloalkyl, cycloalkenyl, aralkyl, alkaryl, condensed-ring, heterocyclic groups, natural product groups, mono-substituted and poly-substituted carboxylate groups.

The substituent is suitably $C_8$-$C_{20}$ alkyl, for example 2-ethylhexyl, di(2-ethylhexyl), n-octyl, nonyl or octadecyl. Alternatively, the substituent many be $C_1$ to $C_4$ alkyl.

Where a pigment according to the present invention is a salt derived from a phosphoric acid, a salt of an alkyl acid phosphate may be employed. Examples of such salts include the zinc, calcium and aluminium salts of n-octyl acid phosphate, nonyl acid phosphate and 2-ethylhexyl acid phosphate.

The preferred pigments for use according to the present invention are the substantially water insoluble salts of phosphonocarboxylic acids, especially the calcium and zinc salts. For example salts of PTCB and HPP have been found highly effective as have salts of phosphonosuccinic acid. The most preferred phosphono carboxylates however are phosphonated oligomers of active olefins which oligomers have the formula

$H[CHRCHR]_n\text{-}PO_3M_2$

wherein at least one R group in each unit is a COOM group and the other R group is hydrogen or a COOM, hydroxyl, phosphono, sulphono, sulphato, $C_{1-7}$ alkyl, $C_{1-7}$ alkenyl group or a carboxylate, phosphono, sulphono, sulphato and/or hydroxy substituted $C_{1-7}$ alkyl or $C_{1-7}$ alkenyl group, and each M is a cation such that the phosphonated oligomer is substantially water insoluble and n is greater than 1, eg. up to 6. Preferably n has a value of less than 5 eg. 1.2 to 3.

Also of value are salts of phosphonated cooligimers of the above formula, but in which the [CHRCHR]n chain contains at least two [CHRCHR] groups derived from different monomers and in which n has a total value of at least 3. For example we include a phosphonated trimer or higher cooligomer of maleate and acrylate containing at least one [$CH_2$ CHCOOM] and at least one [CHCOOM CHCOOM] group.

The invention, according to a preferred embodiment, uses a phosphonated oligomer or mixture of phosphonated oligomers of maleic acid, of the formula $H(CHCO_2M.CHCO_2M)_nPO_3M_2$ where n is greater than 1 and M is a cationic species such that the compound is substantially water insoluble, and especially mixtures of such compounds with phosphonosuccinic acid or its substantially water insoluble salts, often in a minor proportion by weight based on the total weight of the solvent-free mixture.

It is particularly preferred, according to the invention, to use reaction products which comprise: up to 50% by weight of a phosphonosuccinate based on the weight of the solvent-free composition; a phosphonated dimer of maleate; optionally a minor proportion by weight, relative to the weight of dimer, of higher phosphonated oligomers of maleate; and from 0.5 to 5% by weight of phosphate. A phosphonated oligomaleate reaction product of the above type having a degree of polymerisation of 1.3 will be referred to herein as POM.

The aforesaid preferred POM reaction product for use in making pigments according to the invention may be prepared according to the teaching of GB-A-2252322.

The phosphono carboxylate pigments according to our invention may be prepared by contacting an aqueous solution of the corresponding phosphono carboxylic acid or a water soluble salt thereof (e.g. the sodium salt) with a source of polyvalent metal ion such as polyvalent metal oxide, hydroxide or salt of a strong inorganic acid.

Surprisingly the latter polyvalent metal source does not need to be substantially water soluble. Suitable salts include calcium, zinc or barium chlorides, sulphates, nitrates or carbonates. We prefer that the water soluble phosphono carboxylate be present at a molar concentration at least ten times greater than the molar solubility of the product pigment, preferably greater than 5% by weight, more preferably greater than 10% by weight e.g. up to saturation, typically 20 to 60% by weight especially 30 to 55%. The amount of polyvalent metal salt or base added is preferably substantially stoichiometric. The final pH of the product may be typically 4 to 9 e.g. 5 to 8.5, however we prefer that the polyvalent metal salt or base is selected to substantially neutralise the pH of the solution e.g. to give a final pH between 6 and 8, desirably 6.5 to 7.9 more usually 6.8 to 7.8 preferably 6.9 to 7.5, especially 6.9 to 7.1.

Thus a starting solution of sodium salts of phosphonocarboxylic acids is usually alkaline and requires acid salts to neutralise it, whereas a solution containing free acid will require at least a proportion of a base such as lime to neutralise it.

Typical examples of polyvalent metal compounds which may be used in the method of this invention to prepare phosphonocarboxylate pigments include calcium chloride, zinc sulphate, calcium sulphate, barium hydroxide, aluminium sulphate, zinc oxide and calcium oxide.

The reaction is accelerated by heating, e.g. by boiling under reflux. We prefer to operate at temperatures above 30°C more preferably 40 to 100°C. The duration required for the reaction depends on the particular reagents, their concentration and the temperature. We prefer to take the process to substantial completion by mixing the reagents slowly e.g. adding the polyvalent metal compound over a period of from 20 minutes to two hours e.g. 30 to 90 minutes, and subsequently, preferably, ageing the mixture at elevated temperature for up to six hours e.g. one to five hours.

The pigment may be recovered from the mother liquor by filtration, decantation, centrifuging or other appropriate techniques. The pigment is typically washed with cold water and dried, e.g. with hot air or vacuum.

Products for use according to the invention may be used in combination with one another, and/or in conjunction with other anticorrosive or paint ingredients including: surfactants, such as anionic surfactants (eg. $C_{10-20}$ alkyl benzene sulphonates, $C_{10-20}$ olefin sulphonates, $C_{-10-20}$ alkyl sulphates, $C_{10-20}$ alkyl 1 to 25 mole ether sulphates, $C_{10-20}$ paraffin sulphonates, $C_{10-20}$ soaps, $C_{10-20}$ alkyl phenol sulphates, sulphosuccinates, sulphosuccinamates, lignin sulphonates, fatty ester sulphonates, $C_{10-20}$ alkyl phenyl ether sulphates, $C_{10-20}$ alkyl ethanolamide sulphates, $C_{10-20}$ alkyl sulpho fatty acid salts, $C_{10-20}$ acyl sarcosinates, isethionates, $C_{10-20}$ acyl taurides, $C_{10-20}$ alkyl hydrogen phosphates), non-ionic surfactants (eg. ethoxylated and/or propoxylated $C_{10-20}$ alcohols, ethoxylated and/or propoxylated $C_{10-20}$ carboxylic acids, ethoxylated fatty amines or alkanolamides, $C_{10-20}$ acyl sorbitan and/or glyceryl ethoxylates amine oxides and/or fatty alkanolamides) amphoteric surfactants (eg. betaines, sulphobetaines, and/or quaternarised imidazolines), and/or cationic surfactants (eg. benzalkonium salts, $C_{10-20}$ alkyl trimethyl ammonium salts, and/or $C_{10-20}$ alkyl trimethyl or tris(hydroxymethyl) phosphonium salts); sequestrants, chelating agents and corrosion inhibitors (eg. sodium, potassium, calcium, zinc or aluminium tripolyphosphate, ethylenediamine tetracetate, nitrilo triacetate, or pyrophosphate, acetodiphosphonic acid and its salts, ammonium trismethylene phosphonic acid and its salts, ethylenediamine tetrakis (methylene phosphonic) acid and its salts, diethylenetriamine pentakis (methylene phosphonic) acid and its salts and tolyltriazole); biocides (eg. tetrakis (hydroxymethyl) phosphonium salts, formaldehyde, glutaraldehyde); foam controlling agents such as silicone antifoams; oxygen scavengers such as methyl ethyl ketoxime, pine oil, dipentene or guaiacol; pH controlling and/or buffering agents such as amines, borates, citrates and/or acetates; chromium salts; zinc salts; polymeric dispersants and coagulants.

We particularly prefer that the pigments of our invention are used in conjunction with pigments such as titanium oxide, iron oxide, carbon black, phthalocyanine pigments or aluminium stearate, polymers such as chlorinated rubber, polystyrene or silicone, asphalt, wetting agents, dispersants, emulsifiers, biocides, marine antifoulants, antifoams, viscosifiers, fire retardants, fluorescers, aerosol propellants, extenders such as talc or clay and/or plasticisers.

The pigments are preferably dispersed in an anti-corrosive paint, varnish, enamel, lacquer, or other coating formulation. The formulation may comprise a volatile liquid vehicle, such as water or a volatile organic solvent including petroleum spirit, turpentine, ketones, esters and/or aromatic hydrocarbon solvent,

and/or a drying oil, such as linseed oil, soya oil, tung oil or dehydrated castor oil which may optionally be dissolved in said organic solvent or emulsified in said water. The formulation typically may also comprise a resin, or curable resin precursor, e.g. a polyester, urea formaldehyde, melamine, acrylic, alkyd, polyurethane, vinyl chloride, vinyl acetate, phenolic or epoxy resin dissolved or dispersed therein. We prefer that the pigment should comprise additional corrosion inhibiting pigment such as red lead, potassium zinc chromate, metallic zinc or aluminium powder or zinc oxide or zinc, calcium or aluminium phosphate, or citrates.

If zinc oxide is used as an additional pigment, it may suitably be present in the paint composition in an amount of from 0.1 to 50%, preferably 5 to 45%, by weight of the anticorrosive pigment.

The present invention further provides an adhesive composition including one or more anti-corrosive pigments of the invention.

Anti-corrosive pigments soluble in the resin phase are useful in the formulation of adhesive compositions to provide adhesion-promotion and anti-corrosive properties. Adhesive systems include two-pack epoxy and polyacrylate systems.

Adhesives formulated with the anti-corrosive pigments described herein would be suitable for metal-to-metal and metal-to-metal matrix composites, metal-to-plastics composites and the like.

The present invention will be illustrated by way of the following examples:

**Example 1**

In the following Examples, anticorrosive pigments were prepared from the sodium salt of POM as hereinbefore defined, having the formula

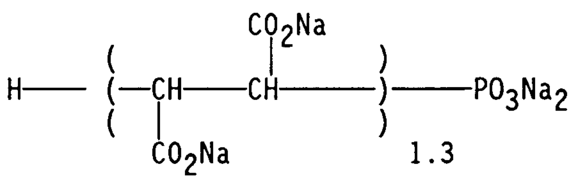

Preparation of Polyvalent Metal salts of POM

(a) Zinc salt

(i) 340g of a 50% w/w aqueous solution of POM (0.5 mol) was heated to 70 °C. To this solution was added a solution of zinc sulphate octahydrate (288g, 1.0mol) in 300g of water over 2 hours. The reaction mixture was heated to reflux for a further 4 hours and allowed to cool to ambient temperature. The white insoluble precipitate was vacuum filtered, washed with water (4 x 500g) and dried in a vacuum oven at 100 °C for 3 days. This afforded 213g of a white powder.

(ii) Sodium-free POM was prepared as a 34% w/w solution by reaction of commercial POM solution with IR 120 H ion exchange resin. 930g of this solution (1.34m) was added over 2 hours to a stirred suspension of zinc oxide (260g, 3.22m) in a 100 g of water. The reaction mixture was then heated to reflux and aged for 4 hours. The white precipitate was filtered, washed with water and vacuum dried. The yield of product was 646g.

(b) Aluminium salt

To 170g of a 50% aqueous solution of POM (0.25 mol) was added a solution of aluminium sulphate hexadecahydrate (106g, 0.168 mol) in 200g of water over 1 hour. The reaction mixture was stirred at ambient temperature for 16 hours. The white insoluble precipitate was centrifuged, washed with water (4 x 500g) and dried in a vacuum oven at 100 °C for 3 days. This afforded 56g of a white powder.

(c) Calcium salt

(i) 170g of a 50% aqueous solution of POM (0.25mol) was added to a suspension of calcium sulphate dihydrate (86g, 0.5mol) in 400g of water. The reaction mixture was heated to reflux and held for 7 hours. The white insoluble precipitate was then vacuum filtered, washed with water (3 x 500g) and dried in a vacuum oven at 100 °C for 3 days. This afforded 85g of a white powder.

(ii) Sodium free POM solution was prepared as described in 1(a)(ii) above. 930g of this solution (1.34m) was added over 2 hours to a stirred suspension of calcium oxide (180g, 3.22m) in 420g of water. The reaction mixture was then heated to reflux and aged for 4 hours. The white precipitate was

filtered, washed with water and vacuum dried. The yield of product was 460g.

(iii) 850g of a 40% solution of POM (1.0mol) was added over 1 hour to a stirred solution of calcium chloride dihydrate (296g, 2.0 mol) in 700g of water. The reaction mixture was then heated to reflux and aged for 4 hours. The white precipitate was filtered, washed with water and vacuum dried. The yield of product was 341g.

(iv) 850g of a 40% solution of POM (1.0 mol) was added over 1 hour to a stirred solution of calcium nitrate tetrahydrate (472g, 2.0 mol) in 800g of water. The reaction mixture was then heated to reflux and aged for 4 hours. The white precipitate was filtered, washed with water and vacuum dried. The yield of product was 342g.

(d) Barium salt

170g of a 50% aqueous solution of POM (0.25mol) was added to a suspension of barium hydroxide octahydrate (157g, 0.5mol) in 400g of water. The reaction mixture was stirred at ambient temperature for 24 hours. The white insoluble precipitate was then vacuum filtered, washed with water (4 x 500g) and dried in a vacuum oven at 100 °C for 3 days. This afforded 125g of a white powder.

## Example 2

In the following examples the pigments were prepared from PTCB as hereinbefore defined, which is sold commercially as "BAYHIBIT" AM (BAYHIBIT is a Registered Trade Mark).

(a) Zinc salt of PTCB.

270g of 33% solution of PTCB (0.5 mol) was added over 1 hour at 50 °C to a stirred suspension of zinc oxide (101g, 1.25 mol) in 400g of water. The reaction mixture was then heated to 70 °C and aged for 5 hours. The white precipitate was filtered, washed with water and vacuum dried. The yield of product was 217g.

(b) Calcium salt of PTCB.

270g of a 33% solution of PTCB (0.5 mol) was added over 1 hour at 50 °C to a stirred suspension of calcium oxide (70g, 1.25 mol) in 300g of water. The reaction mixture was then heated to 70 °C and aged for 5 hours. The white precipitate was filtered, washed with water and vacuum dried. The yield of product was 190g.

## Example 3

In the following examples the pigments were prepared from HPP as hereinbefore defined, which is sold commercially as **"BELCOR"** 575 (**BELCOR** is a Registered Trade Mark).

(a) Zinc salt of HPP

312g of 33% solution of HPP (1 mol) was added over 1 hour at 50 °C to a stirred suspension of zinc oxide (54g, 0.67 mol) in 200g of water. The reaction mixture was then heated to 70 °C and aged for 5 hours. The white precipitate was filtered, washed with water and vacuum dried. The yield of product was 166g.

(b) Calcium salt of HPP

312g of 33% solution of HPP (1 mol) was added over 1 hour at 50 °C to a stirred suspension of calcium oxide (38g, 0.67 mol) in 200g of water. The reaction mixture was then heated to 70 °C and aged for 5 hours. The white precipitate was filtered, washed with water and vacuum dried. The yield of product was 94g.

The salts of Examples 1,2 and 3 were used as anticorrosive pigments in various paint formulations.

The paints were tested using the following procedure.

6" x 4" mild steel panels were used. These were cleaned with xylene, abraded with emery paper, cleaned again with xylene to remove the residue from the abrading and dried.

The paint was applied using a bar coater to a specified dry film thickness. After ageing for 1 week the panels were diagonally scribed and subjected to neutral salt spray.

The steel panels were tested for scribe line corrosion, blistering under the film and degree of rusting.

The following standards were used in connection with the testing of paints as described hereinabove.

(a) Preparation of panels prior to painting: B.S.3900: Part A3: 1965
(b) Determination of resistance to neutral salt spray: B.S.3900: Part F12: 1985
(c) Designation of degree of blistering: B.S.3900: Part H2: 1983
(d) Designation of degree of rusting: B.S.3900: Part H3: 1983

The basic paint formulation used in testing the above pigments was a short oil alkyd resin primer, which had the following formula:

| | |
|---|---|
| carbon black | 2.0g |
| anti-corrosive pigment | 5.4g |
| calcium carbonate | 30.0g |
| alkyd resin | 38.0g |
| xylene | 20.0g |
| cobalt octoate (10% Co) | 0.2g |

**Example 4**

The salts of Examples 1,2 and 3 were used as the anticorrosive pigment and the results are shown in TABLE 1 (below).

Table I

| Pigment | Scribe line corrosion* | Blistering under film* |
|---|---|---|
| Calcium exchange Silica | 2 | 1-2 |
| 1(a)(i) | 1 | 0 |
| 1(b) | 2 | 1 |
| 1(c)(i) | 1 | 1-2 |
| 1(d) | 2 | 1-2 |
| 2(a) | 1 | 0-1 |
| 3(b) | 2 | 1 |
| 60% 1(c)(i)/40% zinc phosphate | 1 | 0 |

*0 = "best" ; 5 = "worst"
Film thickness 40 microns; neutral salt spray 150 hr.

**Example 5**

The two salts of Example 1(a) and (c) were also used as the anticorrosive pigment in a styrene/acrylic copolymer water-based paint formulation that also specified zinc oxide as a constituent. The results are shown in TABLE II (below):-
The formulation of the paint used for the above example was as follows:

| | |
|---|---|
| Bentonite ("Bentone" LT) | 0.75g |
| Water | 29.4 g |
| Surfactant "Disperse Ayd" W22 | 2.25g |
| Rust inhibitor Serad FA 579 | 2.625g |
| Defoamer "Drewplus" TS4380 | 0.25g |
| Styrene/acrylic resin emulsion ("Neocryl" XK62) | 50.0g |
| 2-butoxyethanol | 5.25g |
| Titanium dioxide ("Tioxide" RCR2) | 50.0g |
| 25% ammonia solution | 5.0g |
| Barytes | 14.5g |
| Talc | 22.5g |
| Zinc oxide | 14.5g |
| Styrene/acrylic resin emulsion ("Neocryl" XK62) | 120.0g |
| 2-Butoxyethanol | 10.5g |
| Anti-corrosive pigment | 21.5g |
| Styrene/acrylic resin emulsion("Neocryl" XK62) | 95.0g |
| "Reshydrol" solution | 36.5g |
| "Drewplus" TS4380 | 0.15g |
| 25% ammonia solution | 1.70g |
| Demineralised water | 7.35g |

Dispersed using a high-speed disperser followed by a ball-mill.
"Reshydrol" solution is made up as follows:

| | |
|---|---|
| "Reshydrol" WE- 237 resin - L/70% | 64.3 P.b.w. |
| 2-Butoxyethanol | 30.4 P.b.w. |
| Cobalt drier | 0.8 P.b.w. |
| $NH_3$ solution (25%) up to pH 9 | 4.5 P.b.w. |

Table II

| Pigment | Scribe line * corrosion | Blistering under film * |
|---|---|---|
| Ex. 1 (a)(i) | 1 | 4 |
| Ex. 1 (c)(i) | 1 | 2 |
| MIX[1] | 2 | 5 |
| Zinc phosphate | 4 | 3 |

* 0 = "best" 5 = "worst"
Film thickness 40 microns; neutral salt spray 300 hrs.
1. Mixture of 54.5-62.5% $AlH_2P_3O_{10}.2H_2O$/11.0-15%$SiO_2$/26.5-30%ZnO

**Example 6**

| (a) Two-Pack Epoxy-Polyamide Primer | | |
|---|---|---|
| Base: | Epoxy resin ("Epikote" 1001 x 75)<br>Butanol<br>Methyl isobutyl ketone<br>Xylene<br>Methoxy propyl acetate<br>Anti-corrosive pigments<br>Titanium dioxide<br>Talc<br>Yellow iron oxide<br>Chromium oxide 39<br>Antislip agent ("ByK"300) | 80.6g<br>4.2g<br>40.8g<br>20.7g<br>12.2g<br>31.6g<br>16.7g<br>28.8g<br>2.1g<br>10.4g<br>0.5g |
| Catalyst: | Polyamide resin ("Versamid" 115X)<br>Polyamide resin ("Versamid" 140)<br>Silane A 1120<br>Butanol<br>Xylene | 42.0g<br>9.8g<br>2.5g<br>66.2g<br>53.6g |

Mixing ratio 2 : 1 vol/vol Base/catalyst
PVC 30.0%
Weight solids 51.0%
Volume solids 35.0%
Cure : 7 days at Room Temperature

Table III

| Pigment | Scribe line corrosion | blistering under film |
|---|---|---|
| 1(a) | 0-1 | 3 |
| 1(c) | 0-1 | 0-1 |
| zinc phosphate | 2 | 2 |
| Film thickness 40 microns: neutral salt spray 250 hours. | | |

(b) Two-Pack Epoxy Primer

| | | |
|---|---|---|
| Base: | Epoxy resin ("Epikote" 1001 x 75) | 27.4g |
| | Beetle BE 640 | 1.8g |
| | EFKA-63 | 0.6g |
| | Titanium dioxide | 25.3g |
| | Talc | 22.5g |
| | Barytes | 32.8g |
| | Anticorrosive pigment | 4.4g |
| | Xylene Butanol (1:1) | 30.3g |

| | | |
|---|---|---|
| Catalyst: | Polyamide resin (Versamid 115) in xylene:butanol 65% solution | 14.8g |

| | |
|---|---|
| PVC | 46% |
| Volume solids | 50% |

Film thickness 40 microns; neutral salt spray 250 hrs.

Table IV

| Pigment | Scribe line corrosion | Blistering under film |
|---|---|---|
| 1(a) | 1 | 1 |
| 1(c) | 2 | 2 |
| 60% 1(c)/40% ZnO | 1 | 1-2 |
| 2(a) | 1 | 1-2 |
| 2(b) | 1-2 | 1-2 |
| 1(c)/calcium silicate | 1 | 1-2 |
| Ca exchange silica | 1 | 2 |

| (c) Urethane Alkyd Primer | |
|---|---|
| Urethane resin ("Hythane" 3W) | 63.4g |
| Bentonite | 1.0g |
| Soya lecithin | 0.8g |
| Barytes | 22.4g |
| Titanium dioxide | 10.0g |
| Red iron oxide | 6.8g |
| Talc | 35.0g |
| Anti-corrosive pigment | 21.2g |
| White spirit | 20.2g |
| 10% Calcium carboxylate | 1.6g |
| Methyl ethyl ketoxime | 0.2g |
| Urethane resin ("Hythane" 3W) | 52.2g |
| White spirit | 23.2g |
| 10% Cobalt octoate | 0.3g |
| 24% Lead naphthenate | 1.4g |
| PVC | 30.0% |
| PVC/CPVC (calculated) | 0.59 |
| Volume solids | 35.0% |

Table V

| Pigment | Scribe line corrosion | Blistering under film |
|---|---|---|
| 1(a) | 1-2 | 1-2 |
| 1(c) | 2-3 | 2 |
| 60% 1(c)/40% ZnO | 1-2 | 2 |
| 2(a) | 1 | 1-2 |
| 3(b) | 1-2 | 1-2 |
| Ca exchange silica | 2 | 2 |
| Film thickness 40 microns<br>Neutral salt spray 350 hours | | |

| (d) Epoxy/urea formaldehyde coil coating primer | |
|---|---|
| Epoxy resin ("Epikote" 1007) | 32.3g |
| Xylene | 9.7g |
| Butanol | 6.2g |
| Aromatic hydrocarbon solvent | 9.8g |
| Ethoxy propyl acetate | 21.2g |
| Diacetone alcohol | 1.3g |
| Titanium dioxide | 6.4g |
| Bentonite | 0.6g |
| Aromatic hydrocarbon solvent | 1.0g |
| Diacetone alcohol | 1.4g |
| Urea formaldehyde resin ("Resamine" HF131) | 8.8g |
| Antislip agent (Byk 300) | 0.1g |

PVC 20%
Weight solids 51%
Volume solids 40%
Cure 45 secs/350 ° C (PMT 220 ^ C)

Table V1

| Pigment | Scribe line corrosion | Blistering under film |
|---|---|---|
| 1(a) | 1 | 0-1 |
| 1(b) | 1 | 1-2 |
| 1(c)/ZnO | 1 | 0-1 |
| 2(a) | 1 | 0-1 |
| 3(b) | 1 | 0-1 |
| Ca exchange silica | 1 | 1 |
| Film thickness 30 microns<br>Neutral salt spray 400 hours. | | |

The following examples were prepared following the general method of Example 1.

<u>Salt/composition</u>

Example 7(a) zinc salt of camphyl phosphonic acid
Example 7(b) calcium salt of camphyl phosphonic acid

Example 7(c) aluminium salt of camphyl phosphonic acid
*Available as **ALBRITECT** PPA from Albright & Wilson Ltd., and believed to consist essentially of aluminium silicate.
**ALBRITECT** is a Registered Trade Mark.
Example 8(a) zinc salt of n-octadecyl phosphonic acid
Example 8(b) calcium salt of n-octadecyl phosphonic acid
Example 8(c) aluminium salt of n-octadecyl phosphonic acid
Example 9(a) zinc salt of di-2-ethylhexyl phosphoric acid
Example 9(b) calcium salt of di-2-ethylhexyl phosphoric acid
Example 9(c) aluminium salt of di-2-ethylhexyl phosphoric acid
Example 10(a) zinc salt of n-octane acid phosphate
Example 10(b) aluminium salt of n-octane acid phosphate
Example 10(c) calcium salt of n-octane acid phosphate
Example 11(a) zinc salt of 2-ethylhexyl acid phosphate
Example 11(b) aluminium salt of 2-ethylhexyl acid phosphate
Example 11(c) calcium salt of 2-ethylhexyl acid phosphate
Example 12 aluminium salt of fatty alkyl polyethoxyl acid phosphate
Example 13(a) zinc salt of nonyl acid phosphate
Example 13(b) aluminium salt of nonyl acid phosphate
Example 13(c) calcium salt of nonyl acid phosphate
Example 14 zinc salt of styrene phosphonic acid

The pigments defined in Examples 7 to 14 were tested in the short oil alkyd primer formulation for their anti-corrosive properties using the Scribe Line Corrosion, Blistering Under Film and Rusting tests as hereinabove-mentioned. Calcium exchange silica was used as a control.

Film thickness 25-30 microns; neutral salt spray 150 hours.

**Table VII**

| Pigment | Scribe Line Corrosion | Blistering Under Film | Rusting |
|---|---|---|---|
| Calcium exchange silica (comparative) | 2 | 4 | 3 |
| Ex. 7(a) | 1-2 | 1-2 | 2 |
| Ex. 7(a)/ZnO | 1-2 | 1-2 | 1-2 |
| Ex. 7(a)/PPA/ZnO* | 1 | 1 | 2 |
| Ex. 7(b) | 1 | 1 | - |
| Ex. 7(c) | 2 | 2 | 3-4 |
| Ex. 7(c)/ZnO | 1-2 | 1-2 | 1-2 |
| Ex. 7(c)/PPA/ZnO* | 1-2 | 2 | 3 |
| Comparative | 2 | 4 | 3 |
| Ex. 8(a) | 2 | 4 | 3 |
| Ex. 8(c) | 2 | 3 | 3 |
| Ex. 8(b) | 2 | 4 | 3 |
| Ex. 8(a)/ZnO | 1 | 3 | 3 |
| Ex. 8(c)/ZnO | 1 | 3 | 3 |
| Ex. 8(b)/ZnO | 2 | 3 | 3 |
| Comparative | 1-2 | 3 | 3 |
| Ex. 9(a) | 2-3 | 2-3 | 4-5 |
| Ex. 9(b) | 1-2 | 0 | 2 |
| Ex. 9(c) | 1-2 | 0 | 2 |
| Ex. 9(b)/ZnO | 1 | 0 | 2 |
| Ex. 9(c)/ZnO | 1 | 0 | 2 |
| *2.7g/2.7g/3.2g | | | |

**TABLE VII continued**

| Pigment | Scribe line corrosion | Blistering under film | Rusting |
|---|---|---|---|
| Comparative | 1-2 | 3-4 | 3 |
| Ex. 10(a) | 2 | 2+ | 2-3 |
| Ex. 10(a)/ZnO | 1 | 0-1 | 2 |
| Ex. 10(c) | 3-4 | 3-4 | 3-4 |
| Ex. 10(c)/ZnO | 1-2 | 2-3 | 3 |
| Ex. 10(b) | 3 | 3 | 2-3 |
| Ex. 10(b)/ZnO | 0-1 | 0-1 | 2 |
| Comparative | 2 | 1-2 | 3 |
| Ex. 11(a) | 2 | 1-2 | 3 |
| Ex. 11(a)/ZnO | 0-1 | 1 | 2 |
| Ex. 11(c) | 2 | 1-2 | 3 |
| Ex. 11(c)/ZnO | 0-1 | 1 | 2 |
| Ex. 11(b) | 3 | 2-3 | 3-4 |
| Ex. 11(b)/ZnO | 2-3 | 2-3 | 3-4 |
| Ex. 12 | 2-3 | 2-3 | 3-4 |
| Ex. 12/ZnO | 1-2 | 1-2 | 2-3 |
| Ex. 13(a) | 2-3 | 2-3 | 3 |
| Ex. 13(a)/ZnO | 1-2 | 1-2 | 3 |
| Ex. 13(c) | 2-3 | 2 | 3 |
| Ex. 13(c)/ZnO | 1 | 1-2 | 2-3 |
| Ex. 13(b) | 4 | 4 | 4 |
| Ex. 13(b)/ZnO | 3-4 | 3-4 | 4 |
| Ex. 14 | 2 | 3-4* | 3-4 |

+ bits in paint caused breakthrough of rusting in film.

* Loss of adhesion when film had completely dried after neutral salt spray test. There was no rusting beneath the film.

*0 = "best" 5 = "worst"

The zinc oxide content (when used) is 37% by weight of the total anticorrosive pigment composition in Examples 7 to 14 unless otherwise stated.

## Examples of Pretreatments

### Example 15

Solutions containing 0.5, 1.0, 2.0, 3.0, 4.0 and 5.0% w/w of sodium free POM (50% w/w active material) were prepared in demineralised water.

Panels of hot-dipped galvanised steel (6" x 4") were cleaned by spraying them with an alkaline detergent and rinsed in cold water then hot water. The panels were dried.

An excess of the POM solutions was applied to each of the panels, the excess being removed with a sheen spinner, leaving a uniform film on the metal surface. The panels were dried by heating to 160 °C (peak metal temperature) to give a film of approximately 300 mg/m$^2$.

The dry panels were coated with a chromate-containing epoxy primer using a bar-coater to give a dry film thickness (DFT) of 9µm when heated to a PMT of 216°C. The panels were then coated with $PVF_2$ to give a DFT of 25µm when heated to a PMT of 250^C.

The panels were tested for corrosion resistance in accordance with BS3900:Part F12:1985 (neutral salt spray). For comparative purposes, the corrosion resistance of control panels having been treated with a conventional chromate/silica dispersion in an identical manner to the panels described above, and panels having not been subjected to any form of pretreatment, was also assessed.

After 2000 hours of salt spray testing, the corrosion resistance of the panels pretreated with the POM solutions was found to be comparable to that of panels pretreated with a conventional chromate/silica dispersion and far superior to that of untreated panels.

## Example 16

Solutions were prepared comprising 0.5, 1.0, 2.0, 3.0, 4.0 and 5.0% w/w sodium free POM (50% w/w active material) in a dispersion comprising fumed silica sold under the Trade Mark Aerosil 200 (1.6% w/w) in water.

Panels were prepared and tested as described in Example 15.

After 2000 hours of salt spray testing, the corrosion resistance of panels pretreated with the POM dispersions was found to be comparable to that of panels pretreated with a conventional chromate/silica dispersion and superior to that of untreated panels.

## Example 17

The procedure as described in Example 16 was closely adhered to, but in this instance solutions comprising 1.0, 2.0, 3.0, 4.0, 5.0 and 6.0 w/w PTCB (50% w/w active material) were prepared.

The corrosion resistance of all panels treated with solutions of PTCB, except those panels subjected to a solution of 1% PTCB, was found to be superior to control panels pretreated with a chromate/silica dispersion and markedly more so than unpretreated panels.

## Claims

**1.** An anticorrosive pigment comprising a polyvalent metal salt of an organo-substituted phosphoric acid or of an organo-substituted phosphonic acid, said phosphonic acid containing only one phosphonic acid entity, or of a phosphono carboxylic acid.

**2.** A pigment according to Claim 1 wherein said salt has a solubility in water of 2g/l or lower at 20°C.

**3.** A pigment according to either of Claims 1 and 2 wherein said metal is magnesium, calcium, strontium, barium, aluminium, tin, lead, titanium, zirconium, vanadium, chromium, molybdenum, tungsten, manganese, iron, cobalt or zinc.

**4.** A pigment according to Claim 3 wherein said metal is zinc, calcium or aluminium.

**5.** A pigment according to any foregoing Claim wherein said pigment is an alkyl phosphoric or phosphonic acid wherein said alkyl group comprises from 1 to 20 carbon atoms.

**6.** A pigment according to any of Claims 1 to 4 for inhibiting corrosion wherein said metal salt comprises a phosphonated oligomer of an active olefin, said oligomer having the formula,

$H[CHRCHR]n - PO_3M_2$

wherein at least one R group in each unit is a COOM group and the other R group is hydrogen, or a COOM, hydroxyl, phosphono, sulphono, sulphato, $C_{1-7}$ alkyl, $C_{1-7}$ alkenyl group, or a carboxylate, phosphono, sulphono, sulphato and/or hydroxy substituted $C_{1-7}$ alkyl or $C_{1-7}$ alkenyl group, and each M is a cation, such that the phosphonated oligomer is substantially water insoluble and n is greater than 1.

**7.** A pigment comprising oligomers according to Claim 6 wherein n has an average value of from 1.2 to 3.

8. A pigment according to Claim 7 wherein said [CHRCHR]n chain of said phosphonated oligomer contains at least two [CHRCHR] groups derived from different monomers, and wherein the value of n is at least 3.

9. A pigment according to any one of Claims 6 to 8 wherein said pigment comprises at least one [$CH_2$CH COOM] group and at least one [CHCOOM CHCOOM] group wherein M is as defined in Claim 6.

10. A pigment according to any one of Claims 6 to 9 wherein said pigment comprises at least one phosphonated oligomer of maleic acid of the formula $H(CHCO_2M\text{-}CHCO_2M)nPO_3M_2$ where M is a cation such that the composition is substantially water insoluble.

11. A pigment according to any one of Claims 6 to 10 wherein said pigment comprises: up to 50% by weight of a phosphonosuccinate, based on the weight of the solvent-free pigment; a phosphonated dimer of a maleate; optionally a minor proportion by weight, relative to the weight of said dimer, of higher phosphonated oligomers of said maleate; and from 0.5 to 5% by weight of a phosphate.

12. A method of making a corrosion inhibiting pigment wherein said method comprises heating a reaction mixture comprising an aqueous solution containing from 5% to saturation of a phosphonocarboxylic acid or a water soluble salt thereof with a metal salt of a strong inorganic acid, and separating a solid metal salt of phosphonocarboxylic acid from said reaction mixture.

13. A method according to Claim 12 wherein the molar concentration of said phosphonocarboxylic acid is greater than 10% by weight of said solution.

14. A method according to Claim 13 wherein the molar concentration of said phosphonocarboxylic acid is from 20 to 60% by weight of said solution.

15. A method according to Claim 14 wherein the molar concentration of said phosphonocarboxylic acid is from 30 to 55% by weight of said solution.

16. A method according to any of Claims 12 to 15 wherein said metal salt of a strong inorganic acid comprises a cation selected from calcium, zinc, barium and aluminium, and an anion selected from chloride, sulphate, nitrate carbonate, oxide and hydroxide.

17. A method according to any of Claims 12 to 16 wherein said heating is carried out at a temperature of above 30 ° C.

18. A method according to Claim 17 wherein said heating is carried out at a temperature of from 40 to 100 ° C.

19. A coating composition comprising: (i) a liquid vehicle consisting of a drying oil, a volatile organic solvent and/or water; (ii) a binder consisting of said drying oil and/or a curable resin or film forming polymer dispersed or dissolved in said liquid vehicle; and (iii) a pigment which is dispersed or dispersible in said liquid vehicle and which comprises a pigment according to any of Claims 1 to 11.

20. A composition according to Claim 19 wherein said pigment comprises a substantially water soluble salt of an organic phosphonocarboxylic acid.

21. The use of a polyvalent metal salt of a phosphonocarboxylic acid as an anticorrosive pigment.

22. A process of preparing a metal surface for the subsequent application of an organic finishing coating by applying an aqueous solution comprising an organo substituted phosphoric acid, an organo substituted phosphonic acid having only one phosphono group or a phosphono carboxylic acid, or a dispersion thereof with colloidal silica, to said surface and the coated surface is dried whereby a priming coat of an anticorrosion or adhesion-promoting pigment according to any of Claims 1 to 11 is deposited thereon.

**23.** A process according to Claim 22, wherein said metal surface is iron, aluminium, tin or zinc, or an alloy comprising one or more of these.

**24.** A process according to either of Claims 22 to 23 wherein after the drying of the solution or dispersion, said surface is additionally coated with an organic material.

**25.** A process according to Claim 24 wherein said organic material comprises a heat-curable organic resin which is then cured.